## Europäisches Patentamt

## European Patent Office

## Office européen des brevets

(11) Veröffentlichungsnummer: **0 225 620 B1**

# EUROPÄISCHE PATENTSCHRIFT

(45) Veröffentlichungstag der Patentschrift:
04.10.89

(51) Int. Cl.⁴: **F02B 27/02**

(21) Anmeldenummer: 86116966.2

(22) Anmeldetag: 06.12.86

(54) Mehrzylinder-Brennkraftmaschine mit Ansauganlage.

(30) Priorität: 13.12.85 DE 3544122

(43) Veröffentlichungstag der Anmeldung:
16.06.87 Patentblatt 87/25

(45) Bekanntmachung des Hinweises auf die Patenterteilung:
04.10.89 Patentblatt 89/40

(84) Benannte Vertragsstaaten:
DE ES FR GB IT SE

(56) Entgegenhaltungen:
DE-A- 3 502 699
DE-A- 3 514 327

PATENT ABSTRACTS OF JAPAN, Band 8,
Nr. 191 (M-322)[1628], 4. September 1984; &
JP-A-59 82 523 (MAZDA K.K.) 12-05-1984
PATENT ABSTRACTS OF JAPAN, Band 10,
Nr. 360 (M-541)[2417], 3. Dezember 1986; &
JP-A-61 155 618 (NISSAN MOTOR CO. LTD) 15-07-1986
PATENT ABSTRACTS OF JAPAN, Band 11,
Nr. 16 (M-554)[2463], 16. Januar 1987;
JP-A-61 192 809 (NISSAN MOTOR CO., LTD) 27-08-1986

(73) Patentinhaber: Bayerische Motoren Werke
Aktiengesellschaft, Patentabteilung
AJ-3 Postfach 40 02 40 Petuelring 130,
D-8000 München 40(DE)

(72) Erfinder: Oehling, Karl-Heinz, Schinkelstrasse 17,
D-8000 München 40(DE)

(74) Vertreter: Bücken, Helmut, Bayerische Motoren Werke
Aktiengesellschaft Postfach 40 02 40 Petuelring 130 -
AJ-30, D-8000 München 40(DE)

## Beschreibung

Die Erfindung geht gemäß dem Oberbegriff des unabhängigen Patentanspruches von der JP-A 59/82523 aus.

Bei dieser bekannten Bauart sind einem Brennraum zwei Schwingrohre mit unterschiedlichen geometrischen Abmessungen zugeordnet, die mittels steuerbarer Absperrorgane einzeln oder gemeinsam wirken. Bekanntlich dienen Schwingrohr-Systeme zur Steigerung des Luftaufwandes und damit zur Anhebung des Drehmomentes einer Brennkraftmaschine.

Da bei in Fahrzeugen eingebauten Brennkraftmaschinen die Platzverhältnisse eine Ansauganlage mit in der Länge deutlich unterschiedlichen Schwingrohren nicht ohne weiteres zulassen, sind die Scheitel günstiger Kurvenverläufe für Luftaufwand bzw. Drehmoment hinsichtlich des Drehzahlabstandes relativ eng benachbart. Weiter ist es bekannt, Schwingrohr-Systeme, insbesondere für mittlere und hohe Drehzahlbereiche, zur Verbesserung des Luftaufwandes einzusetzen, wie dies z.B. GB-A 1 136 961 ausweist.

Zur Steigerung des Luftaufwandes bei niedrigen Drehzahlen der Brennkraftmaschine ist es bekannt, die Ansauganlage als Resonanzsystem mit Resonanzrohren und Resonanzbehältern auszubilden. Bei einer Mehrzylinder-Brennkraftmaschine stehen die Resonanzbehälter über Saugleitungen mit Gruppen von Brennräumen mit gleichen Zünd- oder Einspritzabständen in Verbindung, wie dies beispielsweise in der DE-C 1 935 155 für eine mit einem Abgasturbolader ausgerüstete 6-Zylinder-Brennkraftmaschine gezeigt und beschrieben ist.

Schließlich ist aus der JP-A 56 115 818 eine Ansauganlage für eine Mehrzylinder-Brennkraftmaschine bekannt, bei der ein Schwingrohr-System mit einem Resonanzsystem kombiniert ist. Zur baulichen Vereinfachung einer derartigen Anlage wird der für das Schwingrohr-System vorgesehene Sammler mittels einer steuerbaren Drosselklappe in zwei Volumina unterteilt, die als Resonanzvolumen bzw. als Resonanzbehälter dienen. Im Gegensatz zu dem eingangs genannten Schwingrohr-System weist das mit einem Resonanzsystem kombinierte Schwingrohr-System jeweils nur eine Saugleitung zu jedem Brennraum der Mehrzylinder-Brennkraftmaschine auf. Derartige Anlagen zeigen einen ersten günstigen Kurvenverlauf für den Luftaufwand in einem Übergangsbereich von unteren zu mittleren Drehzahlen auf und ferner einen zweiten günstigen Kurvenverlauf für den Luftaufwand im oberen Drehzahlbereich. Im gesamten Kurvenverlauf für den Luftaufwand liegen diese günstigen Wertbereiche drehzahlmäßig relativ weit auseinander mit einem dazwischen liegenden Einbruch. Weiter zeigt der Kurvenverlauf einen relativ steilen Abfall im mittleren niederen Drehzahlbereich. Einen charakteristischen Drehmoment-Kurvenverlauf zeigt im übrigen Bild 2 auf Seite 437 im Heft 10 der ATZ von 1984 für eine vorbeschriebene kombinierte Ansauganlage.

Der Erfindung liegt deshalb die Aufgabe zugrunde, eine Mehrzylinder-Brennkraftmaschine so weiterzubilden, daß der Luftaufwand vom unteren bis in den oberen Betriebsbereich hinein verbessert ist.

Diese Aufgabe wird mit den kennzeichnenden Merkmalen des unabhängigen Patentanspruches gelöst. Grundgedanke der Erfindung ist, bei einer Mehrzylinder-Brennkraftmaschine mit einer aus einem Schwingrohr-System und einem Resonanzsystem kombinierten Ansauganlage durch mehrere je Brennraum bzw. Zylinder vorgesehene, betriebspunktabhängig zu- und/oder abschaltbare Schwingrohre im Resonanz-System unterschiedliche Resonanzen zu erzeugen. Durch geometrische Abstimmung beider Systeme werden dadurch in vorteilhafter Weise drehzahlmäßig benachbarte Resonanzbereiche erzielt. Damit wird der Wirkungsbereich des Resonanz-Systems von einem relativ schmalen Drehzahlbereich auf einen wesentlich größeren Drehzahlbereich erweitert. Die Anwendung der erfindungsgemäßen Resonanz-Aufladung über den unteren und bis in den mittleren Drehzahlbereich der Brennkraftmaschine hinein ergibt bereits im mittleren unteren Drehzahlbereich einen steilen Anstieg im Kurvenverlauf des Luftaufwandes, wobei der Kurvenverlauf im angrenzenden Drehzahlbereich etwa auf gleich Höhe bleibend nahe dem Luftaufwand-Wert "1" verläuft.

Mit zunehmender Last und Drehzahl werden die beiden Resonanzbehälter miteinander kurzgeschlossen, d.h., die beiden Resonanz-Volumina werden zum Sammlervolumen vereint. Bei entsprechender Wahl der geometrischen Abmessungen der Resonanzrohre kann der Einfluß auf die kombinierte Ansauganlage bei ausschließlichem Schwingrohrbetrieb so minimiert werden, daß eine an die Resonanzaufladung anschließende Schwingrohraufladung mit lediglich ersten Schwingrohren der Brennräume bzw. Zylinder ein flacher Verlauf der Luftaufwandkurve nahe "1" erreicht wird. Vorzugsweise werden für diese Schwingrohraufladung im mittleren Drehzahlbereich der Brennkraftmaschine relativ lange Schwingrohre von relativ kleinem Querschnitt bevorzugt. Damit ist der im St.d.T. typische Einbruch zwischen der Resonanzaufladung im unteren Drehzahlbereich und der Schwingrohraufladung im oberen Drehzahlbereich vermieden. Für den Leistungsbedarf im oberen Drehzahlbereich werden für jeden Brennraum bzw. Zylinder mindestens ein weiteres zweites Schwingrohr von zumindest relativ großem Querschnitt zugeschaltet. Das Zuschalten der zweiten Schwingrohre bedeutet für alle offen gesteuerten Schwingrohre ein geändertes Schwingverhalten durch die gegenüber den langen Schwingrohren relativ kürzeren Schwingrohre, wie letzteres für hohe Drehzahlen an sich bekannt ist. Erreicht wird damit im oberen Drehzahlbereich der Brennkraftmaschine ein Verlauf der Luftaufwandskurve über "1", d.h., im Brennraum liegt eine leicht verdichtete Ansaugluft vor.

Mit der erfindungsgemäßen Kombination von Schwingrohr-System und Resonanzsystem in einer Ansauganlage mit betriebspunktabhängiger Betätigung des Absperrorgans im Sammler zur Bildung von Resonanzbehältern und der Zu- und/oder Abschaltung von Schwingrohren durch mit dem Sammlerabsperrorgan gleichsinnig oder mit diesem wechswelweise gegensinnig gesteuerten Absperrorganen wird ein aus vier Einzelkurven gebildeter Kurvenverlauf für den Luftaufwand nahe dem Wert "1" über nahezu den gesamten Vollastbereich erzielt.

Das weiter oben beschriebene Prinzip der Beeinflussung der Resonanz in Richtung höherer Drehzahlen der Brennkraftmaschine mittels Zuschalten weiterer Ansaugquerschnitte durch zweite Schwingrohre kann in vorteilhafter Weise auch resonanzrohrseitig angewendet werden. Wird in weiterer Ausgestaltung der Erfindung nach den Ansprüchen 3 und 4 ein erforderlicher Resonanzrohrquerschnitt auf mehrere Querschnitte von mit einem Resonanzbehälter verbundene Resonanzrohre mit vorzugsweise unterschiedlichen Längen aufgeteilt, wobei zudem die längsten Resonanzrohre ungesteuert sind, ist die im Resonanzrohr bei Resonanz schwingende Luftmasse wesentlich verringert. In Verbindung mit den relativ langen ersten Schwingrohren von relativ kleinem Querschnitt kann die Resonanz in Richtung untere Grenze des unteren Drehzahlbereiches verschoben werden und dabei ein steiler Verlauf der Luftaufwandskurve mit einem relativ hohen Luftaufwandsniveau erreicht werden. Werden weiter die relativ kurzen Resonanzrohre zugeschaltet, ergibt sich mit dem vergrößerten wirksamen Resonanzquerschnitt eine Verschiebung der Resonanzfrequenz zu höheren Drehzahlen, die eine weitere Verbesserung des Luftaufwandes in der zweiten Hälfte des unteren Drehzahlbereiches hin zum unteren mittleren Drehzahlbereich bewirkt. Der weitere Verlauf der Luftaufwandkurve für den mittleren und oberen Drehzahlbereich wird wiederum im wesentlichen über die Schwingrohre bewirkt und ist in seiner Charakteristik im wesentlichen identisch mit dem Kurvenverlauf des Ausführungsbeispieles nach den Ansprüchen 1 und 2. Ein im Hinblick auf die Konstruktion bevorzugtes Ausführungsbeispiel bezüglich der weiteren Ausgestaltung der Erfindung ist in den Ansprüchen 5 und 6 näher beschrieben. Das im Anspruch 6 beschriebene Kurzschließen der Resonanzbehälter über mit dem Ausgleichsbehälter verbundene Ansaugstutzen bewirkt zusammen mit der Abschwächung der Resonanzschwingung mit steigender Motordrehzahl, daß die Resonanzfrequenz damit außerhalb des gewünschten Drehzahlbereiches verschoben wird. Die angesaugte Frischluft strömt zum großen über die kurzen und im Durchmesser vorzugsweise großen Ansaugstutzen, so daß die Resonanzrohre damit im Nebenschluß liegen und, gesteuert oder nicht gesteuert, keinen Einfluß auf das Schwingverhalten der Schwingrohre haben.

Günstig auf den Luftaufwand wirkt sich ferner aus, wenn eine Mehrzylinder-Brennkraftmaschine mit einer erfindungsgemäßen Ansauganlage zusätzlich eine Gaswechselsteuervorrichtung mit einer Überschneidung von Einlaß und Auslaß aufweist. Mittels der Überschneidung kann bei Resonanzaufladung eine Spülung des Brennraumes bewirkt werden. Umfaßt die Gaswechselsteuervorrichtung vorzugsweise für Auslaßventile eine gesonderte Steuerwelle mit einer Steuerwellen-Verstellvorrichtung zur Änderung der Phasenlage der Steuerwelle relativ zur Kurbelwelle, so kann damit auslaßseitig das Maß der Überschneidung betriebspunktabhängig, insbesondere drehzahlabhängig verändert werden. Mittels einer derartigen auslaßseitigen Änderung der Überschneidung ist es in vorteilhafter Weise möglich, über die im Resonanzbetrieb anstehenden Druckwellen in einer ersten Phase eine Durchspülung des Brennraumes zu bewirken und in einer anschließenden Phase bei bereits geschlossenem Auslaßventil über die Druckwelle eine zusätzliche Verdichtung der Ladung im unteren Drehzahlbereich zu bewirken. Dies kann zusätzlich durch eine verstellbare Einlaß-Steuerwelle günstig beeinflußt werden.

Zur weiteren Steigerung des Luftaufwandes im oberen Drehzahlbereich kann die Mehrzylinder-Brennkraftmaschine mit der erfindungsgemäßen Ansauganlage und/oder der vorbeschriebenen Gaswechselsteuervorrichtung zusätzlich mit einem Lader ausgerüstet sein.

Die Erfindung ist anhand von in der Zeichnung schematisch dargestellten Ausführungsbeispielen beschrieben.

Es zeigen:

Fig. 1 mit 4 eine Mehrzylinder-Brennkraftmaschine mit einem ersten Ausführungsbeispiel einer Ansauganlage bei der ein Schwingrohrsystem mit einem Resonanzsystem kombiniert ist, wobei verschiedene Absperrorgane beider Systeme relativ zu einem unabhängig gesteuerten Lufteinlaß betriebspunktabhängig gleichsinnig oder wechselweise gegensinnig gesteuert sind,

Fig. 5 mit 8 ein weiteres Ausführungsbeispiel einer Ansauganlage mit abgeändertem Resonanzsystem,

Fig. 9 ein Diagramm des Verlaufes des Luftaufwandes über der Motordrehzahl mit den erfindungsgemäßen Ansauganlagen.

Eine 6-Zylinder-Reihen-Brennkraftmaschine 1 ist mit einer Ansauganlage 2 ausgerüstet, die aus einem Schwingrohr-System 3 und einem Resonanzsystem 4 gebildet ist. Bei dem Schwingrohr-System 3 sind jedem Brennraum 5 der Brennkraftmaschine 1 jeweils zwei Schwingrohre 6 und 7 zugeordnet. Die ersten und zweiten Schwingrohre 6 und 7 stehen am motorabgewandten Ende mit einem Sammler 8 in Verbindung. Die zweiten Schwingrohre 7 sind von relativ großem Durchmesser und relativ kurz ausgebildet. Die ersten Schwingrohre 6 dagegen sind von relativ kleinem Durchmesser und relativ großer Länge, die vorzugsweise durch einen bogenförmigen Verlauf zwischen dem jeweiligen Brennraum 5 und dem Sammler 8 erzielt wird. In den kurzen, zweiten Schwingrohren 7 ist jeweils brennraumnah ein Absperrorgan 9 angeordnet.

Der Sammler 8 ist durch ein Absperrorgan 10 in zwei volumengleiche Resonanzbehälter 11 und 12 unterteilbar. Die zwei Resonanzbehälter 11 und 12 stehen über die ersten und zweiten Schwingrohre 6 und 7 jeweils mit drei Brennräumen 5 der Brennkraftmaschine 1 in Verbindung, wobei in jeder Gruppe der drei Brennräume 5 jeweils eine Saugfolge von 240° KW gegeben ist. An den Sammler 8 sind Rohre 13 und 14 angeschlossen, die bei Unterteilung des Sammlers 8 in die Resonanzbehälter 11 und 12 als Resonanzrohre dienen. Die Resonanzrohre 13 und 14 wirken mit einem Ausgleichsbehälter 15 zusammen, der mit einem unabhängig gesteuerten Lufteinlaß 16 ausgebildet ist. Stromauf des Lufteinlasses 16 ist ein Luftmengenmesser 17 sowie ein Ansauggeräuschdämpfer 18 angeordnet.

Das Sammler-Absperrorgan 10 und die Schwingrohr-Absperrorgane 9 werden relativ zu dem unabhängig gesteuerten Lufteinlaß 16 betriebspunktabhängig entweder gleichsinnig oder wechselweise gegensinnig mittels eines Rechners gesteuert. Bei entsprechender Steuerung der vorgenannten Absperrorgane wird damit eine verbesserte Resonanzaufladung im unteren Drehzahlbereich der Brennkraftmaschine 1 erreicht. Die verbesserte Resonanzaufladung wird in Fig. 9 anhand der ausgezogenen Kurve für den Luftaufwand dargestellt, wobei die punktierte Kurve den Luftaufwand einer in herkömmlicher Weise aus einem Schwingrohr-System und einem Resonanzsystem gebildeten Ansauganlage entspricht. Der den Verlauf des Luftaufwandes über den gesamten Drehzahlbereich der Brennkraftmaschine 1 in der Vollast darstellende durchgezogene Kurvenzug umfaßt erste Kurvenstücke A und B, die durch Resonanzaufladung erzielt werden. Hierzu ist für den untersten Drehzahlbereich der Brennkraftmaschine 1 die Eigenfrequenz der Resonanzbehälter 11 und 12 und der mit ihnen verbundenen Resonanzrohre 13 bzw. 14 abgestimmt. Die Resonanzbehälter 11 und 12 weisen jeweils ein definiertes Volumen auf, wobei die Resonanzrohre 13 und 14 jeweils eine bestimmte Länge und einen bestimmten Durchmesser aufweisen. Um ferner die Dämpfung in dem Resonanzsystem 4 durch die Schwingrohre 6 und 7 in dem dem Kurvenstück A entsprechenden Drehzahlbereich der Brennkraftmaschine 1 möglichst geringzuhalten, sind die zweiten, kurzen Schwingrohre 7 mittels der Absperrorgane 9 verschlossen. Somit pflanzt sich die Resonanzschwingung nur über das erste längere Schwingrohr 6 mit kleinem Querschnitt zum jeweiligen Brennraum 5 fort. Jedes Schwingrohr 6 ist in seiner Länge und in seinem Querschnitt im Hinblick auf ein relativ kleines Volumen ausgelegt, um die Resonanzschwingung möglichst wenig zu dämpfen.

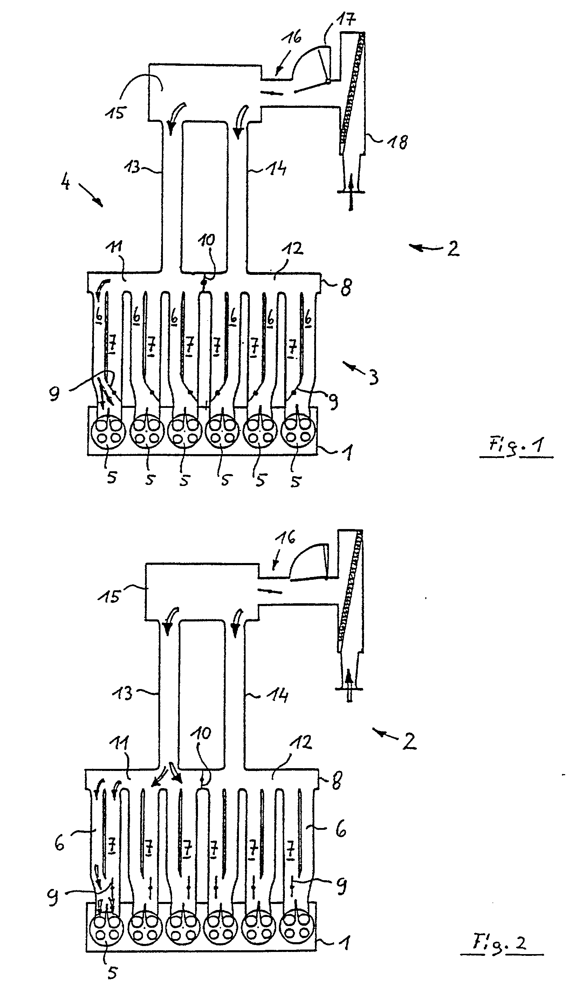

Bei einem Betrieb der Brennkraftmaschine 1 in dem an den Drehzahlbereich der Kurve A angrenzenden Drehzahlbereich für das Kurvenstück B werden gemäß Fig. 2 die Absperrorgane 9 der zweiten kurzen Schwingrohre 7 zusätzlich geöffnet. Die angesaugte Frischluft strömt damit über einen erheblich vergrößerten Schwingrohrquerschnitt dem jeweiligen Brennraum 5 zu. Das Zuschalten der zweiten Schwingrohre 7 bewirkt eine Verschiebung der Resonanz zu höheren Drehzahlen der Brennkraftmaschine 1. Eine entsprechende Abstimmung der Schwingrohre in ihren geometrischen Abmessungen ergibt ohne wesentlichen Einbruch ein an das Kurvenstück A sich anschließendes Kurvenstück B.

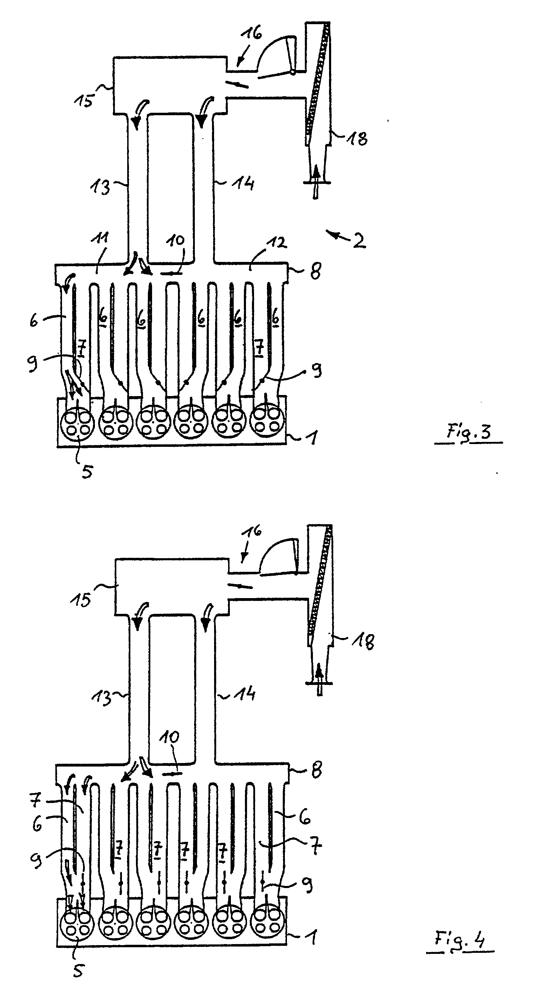

Mit steigender Drehzahl der Brennkraftmaschine 1 schwächt sich die Resonanzschwingung ab. Um ein Absinken des Luftaufwandes zu vermeiden, werden nach Fig. 3 die beiden Resonanzbehälter 11 und 12 durch Öffnen des Absperrorgans 10 miteinander verbunden. Das Zusammenwirken aller Schwingrohre 6 und 7 mit einem einzigen, vom Sammler 8 umschlossenen Volumen ergibt in Verbindung mit der Herabsetzung der Anregungsfrequenz von 240° KW auf 120° KW eine außerhalb des Vollast-Drehzahlbereiches der Brennkraftmaschine 1 liegende Resonanz.

Um im mittleren Drehzahlbereich der Brennkraftmaschine 1 einen hohen Luftaufwand zu erzielen, werden gemäß Fig. 3 die Schwingrohr-Absperrorgane 9 relativ zum Sammler-Absperrorgan 10 gegensinnig bewegt, um die zweiten, kurzen Schwingrohre 7 zu verschließen. Jedem Brennraum 5 fließt demnach die Frischluft ausschließlich über das erste, relativ lange Schwingrohr 6 von relativ kleinem Querschnitt zu.

Der relativ kleine Rohrquerschnitt bewirkt dabei eine hohe Strömungsgeschwindigkeit. Zudem wird mit den relativ langen Schwingrohren 6 gegen Einlaßende ein gewisser Nachladeeffekt bewirkt. Von weiterer Bedeutung für einen hohen Luftaufwand im mittleren Drehzahlbereich ist die Länge der Schwingrohre 6. Da Länge und Durchmesser der Schwingrohre 6 auch für den der Kurve A bei Resonanzaufladung entsprechenden Drehzahlbereich von Bedeutung ist, muß bezüglich der jeweiligen Länge der Schwingrohre 6 ein Kompromiß gefunden werden, der sowohl im unteren Drehzahlbereich entsprechend dem Kurvenstück als auch im mittleren Drehzahlberich entsprechend dem Kurvenstück A jeweils einen hohen Luftaufwand ergibt. Jeder bei einem Brennraum 5 ausgelöste Ansaugvorgang bewirkt im angeschlossenen, offenen Schwingrohr 6 bzw. 7 eine gegen die zuströmende Frischluft wandernde Saugwelle. Eine solche Saugwelle löst in dem gemäß den Fig. 1 und 2 geschalteten Resonanzsystem 4 im unteren Drehzahlbereich eine derartige Eigenschwingung aus, daß am offenen Einlaß eine Resonanz-Druckwelle anliegt. Hierfür ist vor allem der Durchmesser der relativ langen Schwingrohre 6 bedeutsam. Bei Schwingrohrbetrieb der Ansauganlage im anschließenden mittleren und oberen Drehzahlbereich wird erreicht, daß die am offenen Rohrende reflektierte Saugwelle am offenen Einlaß als Druckwelle anliegt und somit füllungsfördernd wirkt. Für den Betrieb der Brennkraftmaschine 1 in den oberen Drehzahlen zur Erhöhung der angesaugten Luftmasse werden zu den ersten, langen Schwingrohren 6 die zweiten, kurzen Schwingrohre 7 durch Öffnen der Absperrorgane 9 zugeschaltet. Mit dem Zuschalten der kurzen Schwingrohre 7 zu den langen Schwingrohren 6 wird eine gemittelte, effektive Länge der beiden Schwingrohre 6 und 7 erreicht. Mit dieser effektiven Schwingrohrverkürzung wird die Wirkung der Schwingaufladung in den oberen Drehzahlbereich der Brennkraftmaschine 1 verschoben, wobei bei entsprechender Abstimmung der gesamten Ansauganlage 2 ohne zusätzliche Hilfseinrichtung der Luftaufwand den Wert "1" gemäß des Kurvenstückes D in Fig. 9 überschreiten kann.

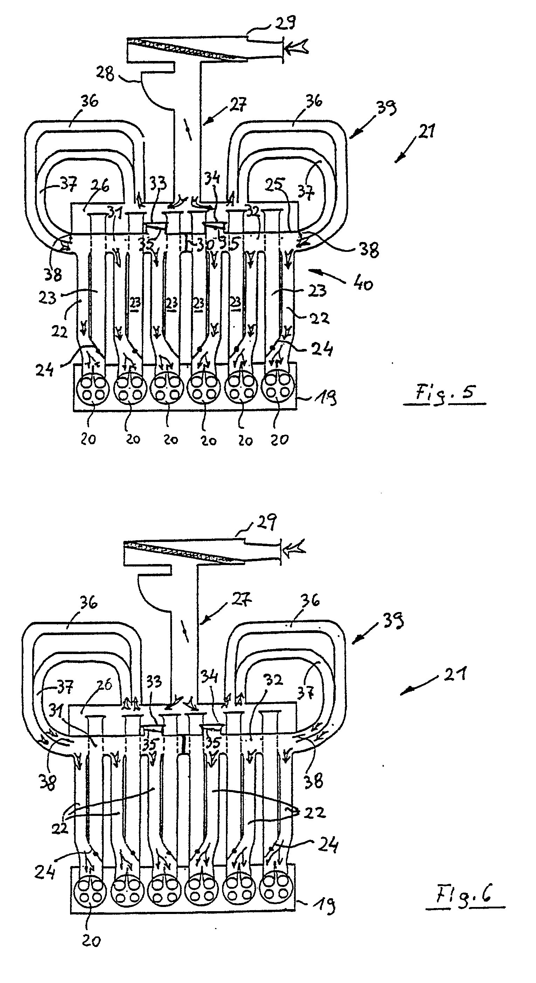

Die in den Fig. 5 mit 8 gezeigte 6-Zylinder-Reihen-Brennkraftmaschine 19 mit Brennräumen 20 ist mit einer gegenüber der Brennkraftmaschine 1 der Fig. 1 mit 4 modifizierten Ansauganlage 21 ausgerüstet, mittels der der Luftaufwand und damit die Brennraumfüllung im unteren Drehzahlbereich weiter angehoben werden kann, wie dies der gestrichelte Kurvenverlauf in Fig. 9 ausweist. Jeder Brennraum 20 der Brennkraftmaschine 19 steht mit zwei Schwingrohren 22 und 23 in Verbindung. Jedes erste Schwingrohr 22 ist durch einen bogenförmigen Verlauf von relativ großer Länge (aus der Zeichnung nicht ersichtlich) und weist einen relativ kleinen Querschnitt auf. Dagegen ist jedes zweite Schwingrohr 23 relativ kurz und mit relativ großem Querschnitt ausgebildet. Weiter ist jedem kurzen Schwingrohr 23 brennraumnah ein Absperrorgan 24 zugeordnet. Die ersten, langen Schwingrohre 22 stehen mit einem Sammler 25 in Verbindung. Dem Sammler 25 baulich benachbart ist ein Ausgleichsbehälter 26, mit dem die zweiten, kurzen Schwingrohre 23 luftführend in Verbindung stehen. Der Ausgleichsbehälter 26 weist einen unabhängig steuerbaren Lufteinlaß 27 auf, der stromauf mit einem Luftmengen- oder Luftmassen-Messer 28 und einem Ansauggeräuschdämpfer 29 in Verbindung steht.

Den Sammler 25 unterteilt eine Trennwand 30 in die Resonanzbehälter 31 und 32. Weiter weist der Sammler 25 im Bereich jedes Resonanzbehälters 31 und 32 jeweils einen mit dem Ausgleichsbehälter 26 in Verbindung stehenden Ansaugstutzen 33 und 34 auf. Jeder der Ansaugstutzen 33, 34 ist mit einem Absperrorgan 35 ausgerüstet.

Die Resonanzbehälter 31 und 32 stehen jeweils über ein langes Resonanzrohr 36 und ein kurzes Resonanzrohr 37 mit dem Ausgleichsbehälter 26 in Verbindung. Die kurzen Resonanzrohre 37 sind an der Einmündung in die Resonanzbehälter 31 und 32 jeweils mit einem Absperrorgan 38 ausgerüstet.

Im Unterschied zu dem Resonanzsystem 4 der Ansauganlage 2 der Brennkraftmaschine 1 nach den Fig. 1 mit 4 ist bei dem Resonanzsystem 39 der Ansauganlage 21 der Brennkraftmaschine 19 gemäß den Fig. 5 mit 8 der Querschnitt der Resonanzrohre 13, 14 jeweils in kleinere Querschnitte für mehrere Resonanzrohre 36, 37 zu einem Resonanzbehälter 31, 32 unterteilt. Weiter sind die Resonanzrohre 36 und 37 unterschiedlich lang, wobei die relativ kürzeren Resonanzrohre 37 durch das Absperrorgan 38 betriebspunktabhängig gesteuert verschließbar sind. Zur Abstimmung der Resonanz des Resonanzsystems 39 für den untersten Drehzahlbereich der Brennkraftmaschine 19 bei Vollast wird neben vorbestimmten Rauminhalten für die Resonanzbehälter 31 und 32 für die wirksamen Resonanzrohre 36 neben einer relativ großen Länge ein Querschnitt angestrebt, der etwa dem Querschnitt der ersten, langen Schwingrohre 22 entspricht. Diese große Rohrlänge bei relativ kleinem Querschnitt bewirkt eine erhebliche Steigerung des Luftaufwandes in den untersten Drehzahlen, wie dies das Kurvenstück A' in Fig. 9 zeigt. Beim Betrieb der Brennkraftmaschine 19 in diesem Drehzahlbereich sind, wie aus Fig. 5 ersichtlich, die Absperrorgane 35 in den Ansaugstutzen 33, 34 sowie die Absperrorgane 38 in den kurzen Resonanzrohren 37 und schließlich die Absperrorgane 24 der zweiten kurzen Schwingrohre 23 rechnergesteuert in Schließstellung gebracht.

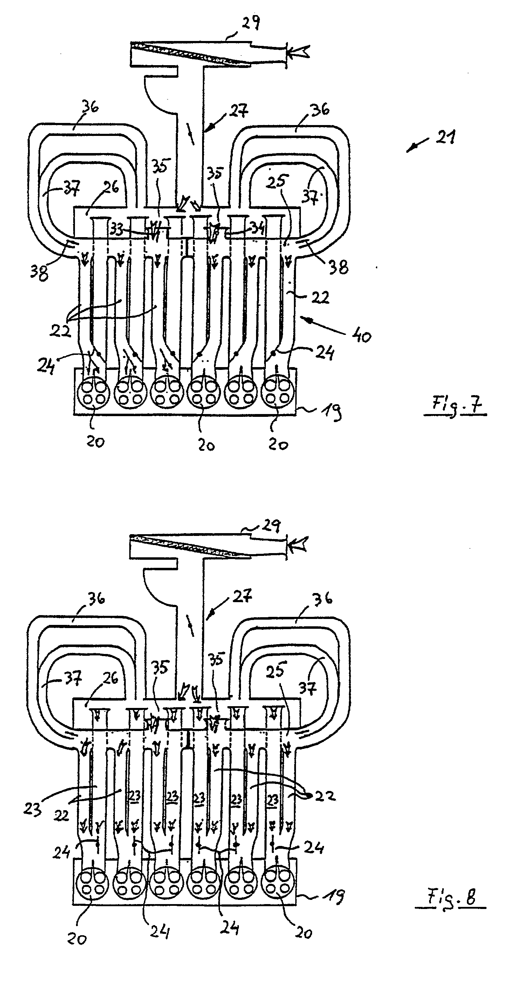

Für den angrenzenden Drehzahlbereich gemäß dem Kurvenstück B' in Fig. 9 werden in den kurzen Resonanzrohren 37 die Absperrorgane 38 in Offenstellung gebracht. Damit vergrößert sich der wirksame Resonanzrohrquerschnitt. Durch die unterschiedlichen Längen der Resonanzrohre 36 und 37 ergibt sich in Verbindung mit dem vergrößerten wirksamen Resonanzquerschnitt eine Verschiebung der Resonanzfrequenz zu höheren Drehzahlen gemäß dem Kurvenstück B' in Fig. 9. Wie aus Fig. 6 ersichtlich, sind bei dieser Resonanzaufladung der Absperrorgane 35 in den Ansaugstutzen 33 und 34 sowie die Absperrorgane 24 der kurzen Schwingrohre in Schließstellung.

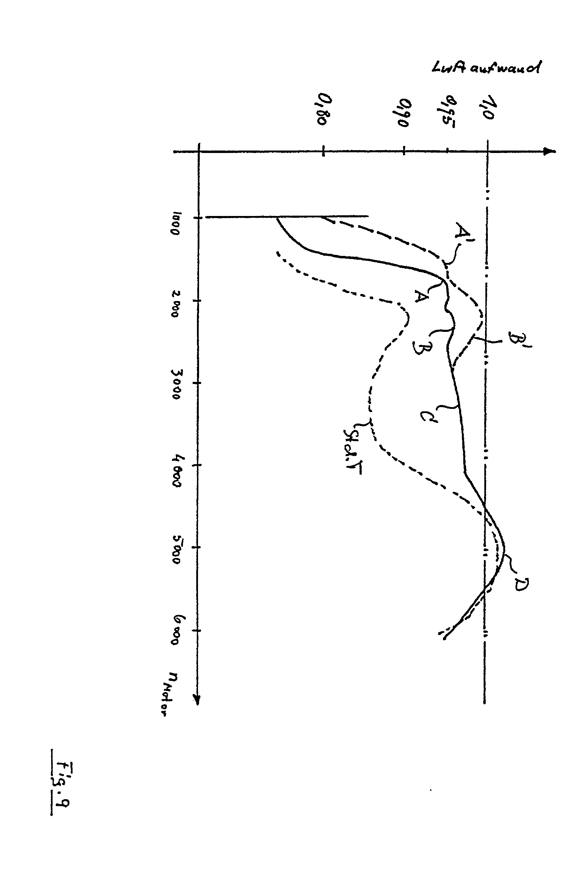

Mit steigender Drehzahl der Brennkraftmaschine 19 schwächt sich die Resonanzschwingung ab und es wird daher die Ansauganlage 21 von der Resonanzaufladung auf die Schwingrohraufladung umgeschaltet. Zu diesem Zweck werden die Absperrorgane 35 in den Ansaugstutzen 33 und 34 in Offenstellung gebracht. Damit werden die jeweils eine Hälfte des Sammlers 25 bildenden Resonanzbehälter 31 und 32 über den baulich benachbarten Ausgleichsbehälter 26 kurzgeschlossen, womit der Sammler 25 durch die von 240° KW auf 120° KW herabgesetzte Anregungsfrequenz seine Funktion in dem Schwingrohr-System 40 übernimmt. Gemäß Fig. 7 wird demnach die Frischluft zum größten Teil über die geöffneten Ansaugstutzen 33 und 34, den Sammler 25 und die ersten, langen Schwingrohre 22 den Brennräumen 20 der Brennkraftmaschine 19 zugeführt.

Schließlich werden für den Betrieb der Brennkraftmaschine 19 im oberen Drehzahlbereich bei Vollast die zweiten, kurzen Schwingrohre 23 durch Öffnen der Absperrorgane 24 zugeschaltet. Mit der Zuschaltung der relativ kurzen Schwingrohre 23 werden in ihrer effektiven Länge kürzere Schwingrohre erreicht mit der Auswirkung einer Verschiebung der Schwingrohraufladung zu höheren Drehzahlen. Der entsprechende Verlauf des Luftaufwandes entspricht daher im wesentlichen wiederum dem Kurvenstück D in Fig. 9.

Bei den Brennkraftmaschinen 1 und 19 kann jeweils im Resonanzbetrieb der Luftaufwand noch zusätzlich dadurch verbessert werden, wenn die Brennkraftmaschinen 1 und 19 jeweils mit einer Gaswechselsteuervorrichtung ausgerüstet sind, die eine Überschneidung von Einlaß und Auslaß aufweist bzw. ermöglicht. Durch ein drehzahlabhängig veränderbares Ausmaß der Überschneidung mittels einer weiteren Vorrichtung zur Verstellung der Phasenlage einer Steuerwelle für Ein- und Auslaß, kann die am offenen Einlaß anstehende Resonanzdruckwelle über den gerade noch offenen Auslaß eine Spülung des Brennraumes bewirken und anschließend bei geschlossenem Auslaß zu einer Erhöhung der Ladung führen. Die Erhöhung der Zylinderladung wird zusätzlich durch verminderte Rückströmverluste vor Einlaßschluß zwischen UT und Einlaßsteuerung bewirkt. Eine derartige Gaswechselsteuerung bewirkt für eine Brennkraftmaschine 1 oder 19 eine Verschiebung der Kurvenstücke A und B' in Richtung des Luftaufwandwertes "1".

Jede der erfindungsgemäß ausgebildeten Brennkraftmaschinen kann schließlich mit einem Lader ausgerüstet sein.

Im Rahmen der Erfindung kann aber auch jede erfindungsgemäß ausgestattete Brennkraftmaschine über die Resonanzrohre aus der Umgebungsluft frei ansaugen, wobei dann ein Resonanzrohr jedes Resonanzsystems zugleich einen unabhängig gesteuerten Lufteinlaß bildet.

**Patentansprüche**

1. Mehrzylinder-Brennkraftmaschine (1, 19) mit einer Ansauganlage (2, 21),
   – die mit jedem Brennraum (5, 20) der Maschine (1, 19) verbundenen ersten und zweiten Schwingrohre (6,7; 22, 23) umfaßt, und
   – die Schwingrohre mit einem Sammler (8, 25) ein Schwingrohr-System (3, 40) bilden, wobei
   – stromauf des Sammlers (8, 25) ein Lufteinlaß (16, 27) mit einem durch ein Lufteinlaß-Absperrorgan unabhängig gesteuerten Durchlaß vorgesehen ist, und
   – stromab des Sammlers in den zweiten Schwingrohren (7, 23) brennraumnah Schwingrohr-Absperrorgane (9, 24) angeordnet sind zur Steuerung ihres Durchflusses, gekennzeichnet durch
   – ein Resonanzsystem (4, 39) mit aus Teilräumen des Sammlers (8, 25) durch Schließen mindestens eines im Sammler angeordneten Sammler-Absperrorgans (10, 35) gebildeten Resonanzbehältern (11, 12; 31, 32( und mit an diesen angeschlossenen Resonanzrohren (13, 14; 36, 37) zur Verbindung mit dem Lufteinlaß (16, 27),
   – wobei jeder Resonanzbehälter (11, 12; 31, 32) mindestens mit den ersten Schwingrohren (6, 22) in Verbindung steht, und
   – ferner das bzw. die Sammler-Absperrorgane (10, 35) und die Schwingrohr-Absperrorgane (9, 24) der zweiten Schwingrohre (7, 23) relativ zum unabhängig gesteuerten Lufteinlaß (16, 27) betriebspunktabhängig gleichsinnig oder wechselweise gegensinnig steuerbar sind.

2. Brennkraftmaschine nach Anspruch 1, dadurch gekennzeichnet,
   – daß die Resonanzrohre (13, 14; 36, 37) mit einem Ausgleichsbehälter (15, 26) zusammenwirken,
   – der mit dem Lufteinlaß (16,17) ausgebildet ist.

3. Brennkraftmaschine nach den Ansprüchen 1 oder 2, dadurch gekennzeichnet,
   – daß mehrere Resonanzrohre (36, 37) mit jedem Resonanzbehälter (31, 32) in Verbindung stehen,
   – wobei Resonanzrohre (37) einer Bauart mit betriebspunktabhängig gesteuerten Absperrorganen (38) ausgerüstet sind.

4. Brennkraftmaschine nach Anspruch 3, dadurch gekennzeichnet,
   – daß die gesteuerten Resonanzrohre (37) gegenüber den übrigen Resonanzrohren (36) relativ kürzer sind,
   – daß je Brennraum (20) Schwingrohre (22, 23) von unterschiedlicher Länge und mit im umgekehrten Verhältnis gewählten Querschnitten vorgesehen sind,
   – wobei die übrigen, längeren Resonanzrohre (36) in ihrem jeweiligen Querschnitt etwa dem jeweiligen, relativ kleinen Querschnitt der relativ langen Schwingrohre (22) entsprechen.

5. Brennkraftmaschine nach den Ansprüchen 2 bis 4, dadurch gekennzeichnet,
   – daß der Sammler (25) und der Ausgleichsbehälter (26) baulich benachbart angeordnet sind,
   – wobei der Sammler (25) bzw. die Resonanzbehälter (31, 32) mit relativ langen Schwingrohren (22) von relativ kleinem Querschnitt zusammenwirkt bzw. zusammenwirken,
   – daß der Ausgleichsbehälter (26) mit relativ kurzen, betriebspunktabhängig gesteuerten Schwingrohren (23) von relativ großem Querschnitt zusammenwirkt, und
   – daß jeder Resonanzbehälter (31, 32) über zwei Resonanzrohre (36, 37) unterschiedlicher Länge mit dem Ausgleichsbehälter (26) verbunden ist.

6. Brennkraftmaschine nach Anspruch 5, dadurch gekennzeichnet,
   – daß der Sammler (25) durch eine Trennwand (30) in Resonanzbehälter (31, 32) unterteilt ist, und
   – jeder Resonanzbehälter (31, 32) über einen Ansaugstutzen (33, 34) mit dem Ausgleichsbehälter (26) verbunden ist, wobei
   – in jedem Ansaugstutzen (33, 34) ein betriebspunktabhängig gesteuertes Absperrorgan (35) angeordnet ist.

7. Brennkraftmaschine nach einem oder mehreren der Ansprüche 1 bis 6, gekennzeichnet durch eine Gaswechselsteuervorrichtung mit einer Überschneidung von Einlaß und Auslaß.

8. Brennkraftmaschine nach Anspruch 7, dadurch gekennzeichnet, daß das Ausmaß der Überschneidung betriebspunktabhängig, insbesondere drehzahlabhängig veränderbar ist.

9. Brennkraftmaschine nach einem oder mehreren der Ansprüche 1 bis 8, dadurch gekennzeichnet, daß ein Lader vorgesehen ist.

**Claims**

1. A multi-cylinder internal combustion engine (1, 19) comprising an intake system (2, 21)
   – which comprises first and second swing pipes (6, 7; 22, 23) connected to each combustion chamber (5, 20) of the engine (1, 19), and
   – the swing pipes form a swing-pipe system (3, 40) with a collector (8, 25), and
   – upstream of the collector (8, 25) an air inlet (16, 17) is provided, its flow passage independently controlled by an air inlet shut-off means and
   – downstream of the collector, swing-pipe shut-off means (9, 24) are disposed near the combustion chamber in the second swing pipes (7, 23) in order to control the flow through them, characterised by
   – a resonance system (4, 39) comprising resonance containers (11, 12; 31, 32) formed from partial volumes of the collector (8, 25) by closing at least one shut-off means (10, 35) disposed in the collector, and also comprising resonance tubes (13, 14; 36, 37) connected thereto for connection to the air inlet (16, 27),

- each resonance container (11, 12; 31, 32) being connected at least to the first swing pipes (6, 22), and
- the or each collector shut-off means (10, 35) and the swing-pipe shut-off means (9, 24) for the second swing pipes (7, 23) are controllable in the same direction or alternately in opposite directions with respect to the operating point relative to the independently-controlled air inlet (16, 27).

2. An internal combustion engine according to claim 1, characterised in that the resonance tube (13, 14; 36, 37) cooperate with an expansion tank (15, 26) formed with the air inlet (16, 17).

3. An internal combustion engine according to claim 1 or 2, characterised in that

- a number of resonance tubes (36, 37) are connected to each resonance container (31, 32) and
- resonance tubes (37) of one constructional kind are equipped with shut-off means (38) controlled in dependence on the operating point.

4. An internal combustion engine according to claim 3, characterised in that

- the controlled resonance tubes (37) are shorter than the remaining resonance tubes (36),
- swing pipes (22, 23) of varying length and cross-sections chosen in inverse ratio are provided for each combustion chamber (20), and
- the other, longer resonance tubes (36) have respective cross-section substantially corresponding to the respective relatively small cross-section of the relatively long swing pipes (22).

5. An internal combustion engine according to claims 2 to 4, characterised in that

- the collector (25) and the extension tank (26) are disposed near one another in the construction, and
- the collector (25) and/or the resonance containers (31, 32) cooperate with relatively long swing pipes (22) having a relatively small cross-section, and
- the expansion tank (26) cooperates with relatively short swing pipes (23) having a relatively large cross-section and controlled in dependence on the operating point and
- each resonance chamber (31, 32) is connected to the expansion tank (26) via two resonance tubes (36, 37) of different length.

6. An internal combustion engine according to claim 5, characterised in that

- the collector (25) is divided by a partition (30) into resonance containers (31, 32) and
- each resonance container (31, 32) is connected via an intake port (33, 34) to the expansion container (26) and
- a shut-off means (35) controlled in dependence on the operating point is disposed in each intake port (33, 34).

7. An internal combustion engine according to one or more of claims 1 to 6, characterised by a gaschange control device with overlapping inlet and outlet.

8. An internal combustion engine according to claim 7, characterised in that the extent of overlap is variable in dependence on the operating point, more especially in dependence on speed.

9. An internal combustion engine according to one or more of claims 1 to 8, characterised in that a supercharger is provided.

**Revendications**

1. Moteur à combustion interne à plusieurs cylindre (1, 19) comportant un système d'aspiration (2, 21) qui entoure la chambre de combustion (5, 20) du moteur (1, 19) chacune étant reliée à une première et à une seconde tubulure à résonance (6, 7; 22, 23) et forment avec un collecteur (8, 25) un système de tubulure à résonance (3, 40) où en amont du collecteur (8, 25) est prévu une admission d'air (16, 27) avec un passage commandé indépendamment par un organe d'arrêt de l'admission d'air, et en aval du collecteur dans la seconde tubulure à résonance (7, 23) au voisinage de la chambre de combustion sont placés des organes d'arrêt de tubulure à résonance (9, 24) pour la commande de leur écoulement, caractérisé en ce que grâce à un système de résonance (4, 39) avec des espaces partiels du collecteur (8, 25) par fermeture d'au moins un des réservoirs de résonance (11, 12; 31, 32) formés dans l'organe d'arrêt de collecteur (10, 35) disposé dans le collecteur (8, 25) et avec des tubes de résonance (13, 14; 36, 37) reliés à celui-ci pour la jonction avec l'admission d'air (16, 27), où chaque réservoir de résonance (11, 12; 31, 32) est au moins en communication avec les premières tubulures à résonance (6, 22) et en outre le ou les organes d'arrêt du collecteur (10, 35) et les organes d'arrêt de tubulures de résonance (9, 24) des secondes tubulures à résonance (7, 23) et les organes d'arrêt peuvent être commandées en fonction du point de fonctionnement dans le même sens ou au choix en sens inverse par rapport à l'admission d'air commandée indépendamment.

2. Moteur à combustion interne selon la revendication 1, caractérisé en ce que les tubes de résonance (13, 14; 36, 37) coopèrent avec un réservoir d'expansion (15, 26) qui est créé avec l'admission d'air (16, 27).

3. Moteur à combustion interne selon les revendications 1 ou 2, caractérisé en ce que les multiples tubes de résonance (36, 37) sont en communication avec chacun des réservoirs de résonance (31, 32) des tubes de résonance (37) étant d'une conception comprenant des organes d'arrêt commandés en fonction du point de fonctionnement.

4. Moteur à combustion interne selon la revendication 3, caractérisé en ce que les tubes de résonance (38) commandés sont relativement plus courts que les tubes de résonance conventionnels (36), en ce que des tubulures à résonance (22, 23) de longueurs différentes et de sections choisies de rapports inversés sont prévues sur chaque chambre de combustion (20), les tubes de résonance usuels plus longs (36) correspondant chacun dans sa section à peu près à chaque section relativement petite des tubulures à résonance relativement longues (22).

5. Moteur à combustion interne selon les revendications 2 à 4, caractérisé en ce que le collecteur (25) et le réservoir de résonance (31, 32) sont placés par construction au voisinage l'un de l'autre, le collecteur (25) et les réservoirs de résonance (31, 32) coopérant avec des tubulures à résonance relativement longues (22) de section relativement faible, en ce que le réservoir d'expansion (26) coopère avec des tubulures à résonance (23) relativement courtes de section relativement grande commandées en fonction du point de fonctionnement, et en ce que chaque réservoir de résonance (31, 32) est relié par deux tubes de résonance (36, 37) de longueurs différentes au réservoir d'expansion (26).

6. Moteur à combustion interne selon la revendication 5, caractérisé en ce que le collecteur (25) est divisé par une paroi de séparation (30) en réservoirs de résonance (31, 32) et en ce que chaque réservoir de résonance (21, 32) est relié par une colonne d'aspiration (33, 34) au réservoir d'expansion (26), où dans chaque colonne d'aspiration (33, 34) est placé un organe d'arrêt commandé en fonction du point de fonctionnement.

7. Moteur à combustion selon une ou plusieurs des revendications 1 à 6, caractérisé par un dispositif de commande de changement de charge avec un chevauchement de l'admission et de l'échappement.

8. Moteur à combustion interne selon la revendication 7, caractérisé en ce que la dimension du chevauchement peut varier en fonction du point de fonctionnement et en particulier en fonction du régime.

9. Moteur à combustion interne selon les revendications 1 à 8, caractérisé en ce qu'on prévoit une suralimentation.

Fig. 1

Fig. 2

Fig.3

Fig.4

*Fig. 5*

*Fig. 6*

*Fig. 7*

*Fig. 8*

Fig. 9